# DEMANDE DE BREVET EUROPEEN

(11) **EP 4 717 074 A2**
(43) Date de publication de la demande: **01.04.2026**
(21) Numéro de dépôt: 26157790.2
(22) Date de dépôt: 19.11.2024
(51) Int. Cl.: A01F 15/00

(54) **DISPOSITIF DE MANUTENTION DE BALLES DE VÉGÉTAUX**

(30) Priorité: 24.11.2023 FR 2312975
(62) Demande divisionnaire de: 24213937.6
(71) Demandeur: JB Industrie, 06340 Drap (FR)
(72) Inventeur: Blanc, Julien, 67000 Strasbourg (FR)
(74) Mandataire: Hautier IP

(57) **Abrégé**

L'invention concerne un groupeur (1) de balles (2a), notamment de foin ou de paille, configuré pour avancer selon une direction principale d'avancement (A), comprenant un système de liage de paquets (2) de balles (2a), caractérisé en ce que le système de liage comprend un système de cerclage (13), le système de cerclage (13) comprenant un cadre (13a) configuré de sorte à entourer un paquet (2) de balles (2a) présents dans le groupeur (1), le système de cerclage (13) étant configuré de sorte à positionner un lien (130) à l'intérieur du cadre (13a) et déclencher, lorsque le paquet (2) de balles (2a) se trouve à l'intérieur du cadre (13a), l'éjection du lien (130) hors du cadre (13a) et l'enroulement puis la fermeture du lien (130) autour du paquet (2).

## Description

### DOMAINE TECHNIQUE

La présente innovation concerne une machine à grouper les balles de végétaux tel que le foin, la paille ou autres végétaux similaires. Ce type de machine est également appelé groupeur de balles. L'invention s'applique notamment aux groupeurs tirés par un tracteur. Cette invention trouve pour application particulièrement avantageuse le groupage des balles de forme parallélépipédique.

### ETAT DE LA TECHNIQUE

Une fois coupé, le foin ou la paille est habituellement rassemblé sous forme de balles qui se trouvent dispersées sur le sol d'un champ. Il existe des groupeurs de balles permettant la collecte des balles, leur groupage, leur compactage et leur empaquetage sous forme d'un paquet de plusieurs balles. Certaines machines permettent également de liaisonner les balles d'un paquet pour maintenir l'intégrité du paquet. Lorsqu'un paquet est constitué, il est ensuite déposé sur le sol en vue d'être collecté par une autre machine.

Plus précisément, les groupeurs, qu'ils soient tractés par tracteurs ou équipés de roues motrices, comprennent en général un système d'acheminement permettant le ramassage de balle une à une au sol et l'acheminement de la balle vers une cage de regroupement permettant le groupage et éventuellement le compactage des balles en un paquet.

Les systèmes d'acheminement généralement utilisés présentent un tapis ou une chaine positionnée longitudinalement au sens d'avancement du tracteur. Ces systèmes d'acheminement sont positionnés en arrière du tracteur. Ce positionnement implique une dimension longitudinale de la machine importante. La conduite et la manœuvre de l'ensemble roulant, comprenant le tracteur et le groupeur, est donc délicate pour l'utilisateur et ne convient pas à tous les types de voiries.

Une machine présentant un système d'acheminement de ce type est par exemple présentée dans le document US2012055759. Le positionnement en arrière du tracteur implique une dimension longitudinale importante et implique que le conducteur du tracteur doit regarder à l'inverse du sens d'avancement de celui-ci pour correctement aligner le système de ramassage avec les balles présentent au sol.

Afin de réduire l'encombrement suivant la dimension longitudinale, le document FR2460602A1 détaille une cage de regroupement horizontale et positionnée perpendiculairement au sens d'avancement du tracteur, la cage étant déportée par rapport au tracteur. Cette configuration implique un encombrement important suivant l'axe transversal. La largeur de l'ensemble roulant est donc importante. En plus des difficultés de pilotage et de manœuvre, cela entraine un changement de catégorie de véhicule de l'ensemble roulant ce qui oblige l'utilisateur à réduire sa vitesse de déplacement sur route.

Afin de réduire l'encombrement suivant l'axe transversal, le document US7610851B1 détaille une cage de groupement positionnée horizontalement et suivant la direction longitudinale. Afin de créer un paquet, ce document montre une plaque tournante entrainant en rotation les balles de paille pour que leur section longitudinale se retrouve perpendiculaire au sens d'avancement du tracteur. Cette plaque tournante entraine la création d'une zone supplémentaire augmentant ainsi d'autant plus la dimension longitudinale de la machine.

Le document ES1290184U propose alors une solution afin de réduire la dimension longitudinale d'une machine de ce type en positionnant la cage de groupement non pas horizontalement mais verticalement. Le positionnement vertical implique que la machine peut ne pas être facilement maniable sous des ponts par exemple et peut donc impliquer que certains exploitants ne peuvent l'amener jusqu'à leurs champs. De plus, une machine de ce type ne peut être utilisée sur des exploitations présentant une pente car elle présente alors un risque de chavirage.

Les systèmes connus sont ainsi en général imposants et peuvent ne pas convenir à des exploitations spécifiques telles que celles en pente. De plus, ils ne sont pas adaptés pour une utilisation sur de petites exploitations ayant un rendement de l'ordre de moins de 40 000 balles par an. En effet, le coût d'une telle machine est trop élevé par rapport au rendement de ces petites exploitations.

Un objet de la présente invention est donc de proposer une solution pour réduire les dimensions d'un groupeur de balles tout en conservant une taille de paquet satisfaisante pour l'utilisateur, notamment pour faciliter sa circulation.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation, on prévoit un groupeur de balles selon la revendication 1.

Selon un autre objet on prévoit un groupeur de balles, notamment de foin ou de paille, configuré pour avancer selon une direction principale d'avancement comprenant :
- un dispositif de ramassage configuré pour :
   ∘ ramasser des balles présentant une direction longitudinale et disposées sur un sol et,
   ∘ acheminer les balles selon une direction d'acheminement contenue dans un plan vertical et parallèle à la direction principale d'avancement jusqu'à une zone de sortie et en maintenant la direction longitudinale des balles parallèle à un plan vertical comprenant la direction principale d'avancement,
- une chambre de groupement des balles, configurée pour recevoir les balles acheminées par le dispositif de ramassage et comprenant un plancher, le plancher étant configuré pour supporter plusieurs balles en maintenant la direction longitudinale des balles parallèle à un plan vertical comprenant la direction principale d'avancement ; de préférence, les balles étant disposées cote à cote selon une direction de groupement de sorte à former une partie au moins d'un paquet de balles, la direction de groupement étant perpendiculaire à ladite direction principale d'avancement, la chambre présentant une ouverture de sortie conformée pour permettre l'évacuation du paquet hors de la chambre de groupement en vue de son évacuation par gravité sur le sol,
la chambre de groupement comprend un dispositif de transit conformé pour déplacer par gravité chaque balle depuis la zone de sortie du dispositif de ramassage jusqu'à la chambre de groupement, le dispositif de transit comprenant une rampe et une surface de réception, le dispositif de transit étant monté mobile en rotation autour d'un axe horizontal, dit de basculement, entre :
- une première position dans laquelle la rampe est inclinée par rapport à la verticale et la surface de réception est inclinée par rapport à l'horizontal, de sorte que chaque balle glisse sur la rampe par gravité depuis la zone de sortie du dispositif de ramassage jusqu'à parvenir en butée sur la surface de réception,
- une deuxième position dans laquelle la rampe se redresse en direction de la verticale, de préférence, en étant sensiblement à la verticale, et la surface de réception est positionnée de sorte à former une partie du plancher.

Le groupeur comprenant un actionneur configuré pour faire translater la rampe selon la direction de groupement, depuis la deuxième position, de sorte à exercer sur les balles un effort tendant à déplacer les balles à l'intérieur de la chambre de groupement depuis la surface de réception en direction d'un fond de la chambre de groupement.

Ainsi, l'invention propose une solution afin d'obtenir un groupeur présentant des dimensions les plus limitées possibles. La réduction de la chambre de regroupement à une dimension minimale permet de réduire la taille transversale du groupeur tout en conservant une taille de paquet satisfaisante pour l'utilisateur.

Selon un exemple, les dimensions transversales et longitudinales du groupeur selon l'invention ont été réduites afin que le groupeur puisse avancer sur la route sans autorisations spéciales réservées aux véhicules spéciaux. Le groupeur est ainsi facilement maniable sur n'importe quelle exploitation, même en pente, et permet avantageusement d'être utilisé par des exploitations ayant un accès non accessible à des dimensions de groupeur de l'art antérieur.

De plus, les balles, lors du groupement, restent de l'entrée à la sortie du groupeur dans une seule et même direction c'est-à-dire leur direction longitudinale, cette direction étant parallèle à la direction principale d'avancement du groupeur. La limitation des rotations des balles permet d'éviter un encombrement important selon la direction longitudinale du groupeur. En effet, contrairement aux solutions prévues par l'art antérieur afin de grouper des balles de façon plus compacte, les balles ne sont pas mises en rotation pour être placées perpendiculairement à la direction principale d'avancement du groupeur. La solution proposée ici permet de rendre plus compact le groupeur tout en limitant la quantité d'éléments utilisés permettant par la suite de réduire son coût.

Enfin, cette solution est adaptée pour des exploitations entrant dans une large gamme de rendements en termes de nombre de balles empaquetées par an.

Selon un autre aspect, on prévoit, un ensemble comprenant un groupeur selon l'invention et une pluralité de balles, notamment de foin ou de paille, le groupeur étant configuré de sorte que le dispositif de transit passe de la première position à la deuxième position après qu'au moins deux balles de la pluralité soient disposées sur la rampe et au contact l'une de l'autre, dans la deuxième position, l'une des au moins deux balles étant située sur l'autre des au moins deux balles. Ainsi, le groupement de balles dans la chambre de groupement présente une hauteur de au moins deux balles, limitant ainsi également la troisième dimension du groupeur. Le groupeur, selon l'invention présente une hauteur également limitée par rapport aux solutions présentées dans l'art antérieur telle la solution du document ES1290184U, permettant au groupeur de passer sous des ponts sans difficultés et d'être utilisable dans des champs en pente.

Selon un autre aspect, on prévoit un groupeur de balles, notamment de foin ou de paille, configuré pour avancer selon une direction principale d'avancement comprenant :
- un dispositif de ramassage configuré pour :
   ∘ ramasser des balles présentant une direction longitudinale et disposées sur un sol et
   ∘ acheminer les balles parallèlement à la direction principale d'avancement jusqu'à une zone de sortie et en maintenant la direction longitudinale des balles parallèle à un plan vertical comprenant la direction principale d'avancement,
- une chambre de groupement des balles, configurée pour recevoir les balles acheminées par le dispositif de ramassage et comprenant un plancher, le plancher étant configuré pour supporter plusieurs balles en maintenant la direction longitudinale des balles parallèle à un plan vertical comprenant la direction principale d'avancement ; de préférence, les balles étant disposées côte à côte selon une direction de groupement de sorte à former une partie au moins d'un paquet de balles, la direction de groupement étant perpendiculaire à ladite direction d'avancement, la chambre présentant une ouverture de sortie conformée pour laisser tomber par gravité sur le sol le paquet,
la chambre de groupement comprend un dispositif de transit conformé pour déplacer par gravité chaque balle depuis la zone de sortie du dispositif de ramassage jusqu'à la chambre, le dispositif de transit comprenant une rampe et une surface de réception, le dispositif de transit étant monté mobile en rotation autour d'un axe horizontal, dit de basculement, entre :
- une première position dans laquelle la rampe est inclinée par rapport à la verticale de sorte que chaque balle glisse sur la rampe par gravité depuis la zone de sortie du dispositif de ramassage jusqu'à parvenir en butée sur la zone de réception,
- une deuxième position dans laquelle la rampe se redresse en direction de la verticale de sorte à exercer sur les balles un effort tendant à déplacer les balles à l'intérieur de la chambre depuis la zone de réception en direction d'un fond de la chambre.

Selon un autre aspect, on prévoit un système de liage comprenant un système de cerclage, le système de cerclage comprenant un cadre, de préférence rectangulaire, positionné de préférence au niveau de l'ouverture de sortie d'une chambre d'un groupeur de balles, et positionné de sorte à entourer un paquet de balles. Le cadre est configuré de sorte à entourer un paquet de balles présent dans le groupeur. De préférence, le cadre est configuré pour entourer l'ouverture de sortie. Le système est configuré pour positionner un lien à l'intérieur du cadre et déclencher, lorsque le paquet se trouve à l'intérieur du cadre, l'éjection du lien hors du cadre et l'enroulement puis la fermeture du lien autour du paquet.

On notera que ce système de cerclage est particulièrement efficace, peu onéreux et peu encombrant. Il peut être utilisé sur un groupeur indépendamment du dispositif de transit décrit précédemment et peut faire l'objet d'une protection indépendante.

Selon cet aspect, le cadre comprend :
- un dispositif de positionnement de lien, le dispositif de positionnement étant configuré de sorte à positionner au moins un lien, de préférence une pluralité de liens, sur au moins une partie d'un contour fermé, de préférence sur la totalité du contour fermé, de préférence, le dispositif de positionnement est configuré de sorte à pousser l'au moins un lien le long du cadre,
- une tête de cerclage, la tête de cerclage étant configuré de sorte à tendre et fermer l'au moins un lien autour du paquet.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue du haut du groupeur porté par un tracteur selon un mode de réalisation.
La figure 2 représente une vue de profil du groupeur selon un mode de réalisation.
La figure 3 représente une vue arrière du groupeur selon un mode de réalisation.
La figure 4 représente une vue en perspective du groupeur selon un exemple de l'invention.
Les figures 5A à 5G représentent le montage d'un paquet d'une pluralité de balles dans un groupeur selon un exemple de réalisation.
Les figures 6A, 6B et 6C représentent le dispositif de transit réalisant les mouvements de rotation et de translation effectués selon un exemple.
La figure 7 représente une balle selon un exemple.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, dans la première position, la rampe est inclinée par rapport à la verticale en formant un angle avec la verticale sensiblement supérieur ou égal à 20°, de préférence supérieur ou égal à 40°, de préférence égal à 48°. Ainsi, l'angle est suffisant afin de permettre aux balles de glisser sur la rampe par gravité.

Selon un exemple, la surface de réception s'étend sensiblement perpendiculairement, de préférence perpendiculairement à un plan dans lequel s'étend principalement la rampe. Ainsi, les balles présentent une face au contact de la rampe et une autre face en appui sur la zone de réception.

Selon un exemple, l'axe de basculement est parallèle à la direction principale d'avancement. Ainsi, la balle est intégrée dans la chambre de groupement en ayant ses dimensions longitudinales et transversales orientées suivant un même plan, de l'introduction dans le groupeur à la sortie du groupeur.

Selon un exemple, un deuxième actionneur est configuré de sorte à faire passer le dispositif de transit de la première position à la deuxième position selon l'axe de basculement. Le deuxième actionneur permet ainsi de réaliser un mouvement de rotation suivant un seul axe.

Selon un exemple, le deuxième actionneur est un actionneur linéaire, de préférence le deuxième actionneur est un vérin par exemple hydraulique, électrique ou pneumatique.

Selon un exemple, la chambre de groupement forme une cage.

Selon un exemple, la cage est de forme parallélépipédique et présente des surfaces ouverte et/ou fermée.

Selon un exemple, le premier actionneur configuré pour faire translater la rampe selon la direction de groupement est un actionneur linéaire. Le premier actionneur permet ainsi de réaliser un paquet de balles et permet au moins en partie un compactage du paquet de balles.

Selon un exemple, le premier actionneur est un vérin, le vérin pouvant être hydraulique, électrique ou pneumatique. Le premier actionneur permet ainsi de réaliser une translation suivant un seul axe.

Selon un exemple, le groupeur est configuré de sorte à avancer en étant entièrement supporté par un tracteur. Le groupeur peut alors ne pas comprendre de châssis routier, d'essieu ou de roues, le groupeur est alors plus compact et plus léger et tout son poids peut donc être porté par un tracteur. La non-présence d'un châssis routier permet également de diminuer les coûts du groupeur.

Selon un exemple, le groupeur est configuré de sorte à avancer en étant tracté par un tracteur. Selon un exemple, le groupeur comprend des roues additionnelles. Les roues, quand elles sont présentes, permettent de supporter le groupeur et lui permettent d'avancer sous l'effet de tractation par un tracteur dans la direction principale d'avancement de celui-ci. La tractation peut être utilisée par des tracteurs pas assez puissants pour relever le groupeur, le groupeur présentant un poids d'environ 1500kg.

Selon un exemple alternatif, le groupeur est motorisé de sorte à avancer en roulant. Cela permet au groupeur d'être indépendant et de ne pas dépendre d'un tracteur.

Selon un exemple, le groupeur présente une dimension maximale, dite transversale, mesurée perpendiculairement à la direction principale d'avancement, sensiblement inférieure ou égale à 3,5 m, de préférence inférieure ou égale à 3 m, de préférence inférieure ou égale à 2,95 m. Le groupeur est ainsi compact dans sa dimension transversale. De plus, cette dimension peut permettre de rester en dessous du seuil de réglementation routière.

Selon un exemple, la surface de réception est solidaire de la rampe lors de l'actionnement du deuxième actionneur pour passer sélectivement de la première à la deuxième position. Ainsi, cela permet de réaliser un seul mouvement de basculement pour les deux éléments à la fois.

Selon un exemple, la rampe coulisse relativement à la surface de réception lors de l'actionnement du premier actionneur. L'articulation des éléments entre eux après le basculement permet la translation de la rampe seule et permet donc à la surface de réception de faire partie intégrante du plancher de la chambre de groupement.

Selon un exemple, le groupeur est configuré de sorte que lors de la translation, les au moins deux balles sont déplacées sous forme d'une pile de balles. Ainsi, la hauteur d'un paquet est limitée à au moins deux balles.

Selon un exemple, le paquet de balles est configuré de sorte à avoir une hauteur supérieure ou égale à 2*H_{b}, de préférence égale à 2*H_{b}. La hauteur de la chambre est donc ainsi compacte sur sa dimension verticale. Cela permet d'avoir une hauteur de chambre de groupement limitée. Suivant la hauteur H_{b} des balles, par exemple pour une hauteur H_{b} inférieure à 46cm, au moins trois balles peuvent former la hauteur du paquet.

Selon un exemple, chaque balle de la pluralité de balles est parallélépipédique avec leur plus grande dimension correspondant à la direction longitudinale.

Selon un exemple, le premier actionneur est configuré pour déplacer la rampe d'une distance supérieure ou égale à X fois la dimension transversale L_{b} d'une balle, la dimension transversale étant parallèle à la direction de groupage, de préférence X>1*L_{b} et de préférence X>1.2*L_{b}. Ainsi, cela permet à la pile de balles de ne plus être en contact avec la surface de réception. De plus, cela permet de compacter le paquet de balles vers le fond de la chambre de groupement.

Selon un exemple, la surface de réception présente une dimension transversale inférieure ou égale à la dimension transversale L_{b} d'une balle, de préférence égale à la dimension transversale L_{b} d'une balle. Cela permet ainsi que le plancher de la chambre de groupement corresponde à une largeur plus faible et donc être plus compact.

Selon un exemple, la chambre de groupement est configurée de sorte à présenter une dimension transversale L_{c} égale à N*L_{b} avec N étant le nombre de balles positionnées côte à côte, de préférence N étant supérieure ou égale à 5, de préférence N étant égale à 5. Cela permet ainsi d'avoir au moins cinq piles de balles positionnées latéralement les unes par rapport aux autres. Selon un exemple, la zone de sortie comprend un mécanisme de sortie et un système de rétention comprenant une surface de rétention, le système de rétention étant configuré pour retenir au moins une balle dans la zone de sortie, le système de rétention étant monté mobile en rotation autour d'un axe horizontal, dit de pivotement, entre :
- une première position dans laquelle la surface de rétention maintient la balle dans la zone de sortie,
- une deuxième position dans laquelle la surface de rétention s'écarte de la première position de sorte que chaque balle glisse sur la rampe par gravité depuis la zone de sortie du dispositif de ramassage jusqu'à parvenir en butée sur la surface de réception.

Le système de rétention permet ainsi de retenir les balles dans la zone de sortie le temps que le dispositif de transit soit dans sa première position.

Selon un exemple, la rotation du système de rétention est réalisée par un troisième actionneur mécanique, de préférence par un troisième actionneur linéaire, de préférence le troisième actionneur linéaire est un vérin. Le troisième actionneur mécanique permet ainsi de réaliser un mouvement de rotation suivant un seul axe.

Selon un exemple, le mécanisme de sortie est conformé de sorte qu'en l'absence de la surface de réception, la balle bascule, sous l'effet de la gravité, autour d'un axe parallèle à son axe longitudinal. Ainsi, en deuxième position du système de rétention, la surface de réception empêche ou limite le basculement de la balle.

Selon un exemple, la surface de rétention est conformée pour venir en appui sur une face de la balle sensiblement verticale lorsque la balle est dans la zone de sortie. La balle est ainsi retenue dans la zone de sortie.

Selon un exemple, la chambre de groupement est configurée de sorte à réaliser un paquet d'au moins 8 balles, de préférence un paquet d'au moins 10 balles. La chambre de groupement permet ainsi d'avoir un rendement satisfaisant tout en réduisant au maximum la taille de la chambre de groupement.

Selon un exemple, la chambre de groupement comprend un dispositif plaquant configuré de sorte à exercer une force verticale sur le paquet de balles, la force étant orientée de sorte à plaquer le paquet contre le plancher. Cela permet de plaquer la pile de balles puis par la suite le paquet de sorte à ce que lors de la translation suivant l'axe de groupement la pile ne tombe pas. De plus, cela permet également de compresser verticalement le paquet afin d'avoir un paquet compact. Selon un exemple, la chambre de groupement comprend un système de poussée configuré pour exercer une poussée sur le paquet de sorte à permettre l'éjection du paquet de balles hors de la chambre de groupement à travers l'ouverture de sortie suivant une direction d'éjection, la direction d'éjection étant de préférence parallèle à la direction principale d'avancement. Cela permet ainsi une éjection facile dans le même sens que l'entrée dans le groupeur et permet de garder les balles suivant leur dimension longitudinale.

Selon un exemple, l'ouverture de sortie comprend un système de liage configuré de sorte à lier les balles du paquet de balles. Cela permet d'empaqueter le paquet afin que les balles soient solidaires les unes des autres.

Selon un exemple, le système de liage comprend un système de cerclage. Le système de cerclage comprenant un cadre configuré de sorte à entourer un paquet de balles, et de préférence configuré pour entourer l'ouverture de sortie. Le système de cerclage étant configuré pour positionner un lien à l'intérieur du cadre et déclencher, lorsque le paquet se trouve à l'intérieur du cadre, l'éjection du lien hors du cadre et l'enroulement puis la fermeture du lien autour du paquet. Cela permet de réaliser un cerclage sur le contour du paquet.

Selon un exemple, le système de cerclage est configuré de sorte à apposer des liens sur le paquet perpendiculairement à la direction d'éjection.

Selon un exemple, le système de cerclage est configuré de sorte à apposer au moins un lien, à le tendre et à le fermer au niveau d'une épissure sur le paquet, le lien étant configuré pour être positionné à une position N prédéterminée.

Selon un exemple, le dispositif de transit est de préférence configuré de sorte que, dans la deuxième position, la rampe se redresse en direction de la verticale, de préférence en étant sensiblement à la verticale, et la surface de réception est positionnée de sorte à former une partie du plancher, sensiblement à l'horizontale et sensiblement coplanaire avec le plancher. Le plan dans lequel s'étend le plancher de la chambre peut être quelques millimètres, voire quelques centimètres de préférence moins de 5 centimètres, au-dessous de la surface de réception, lorsque cette dernière est dans la deuxième position.

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telle que par exemple l'expression « A agit sur B » qui peut signifier « A agit directement sur B » ou « A agit sur B par l'intermédiaire d'une ou plusieurs autres pièces ».

Dans la description détaillée qui suit, il pourra être fait usage de termes tels que « horizontal », « vertical », « longitudinal », « transversal », « supérieur », « inférieur », « haut », « bas », « avant », « arrière », « intérieur », « extérieur ». Ces termes doivent être interprétés de façon relative en relation avec la position normale du groupeur et la direction d'avancement de celui-ci. Par exemple, la notion longitudinale d'une balle correspond à la dimension la plus grande d'une balle s'étendant suivant la direction principale d'avancement. De même, la notion longitudinale du groupeur s'entend comme la dimension parallèle à la direction principale d'avancement.

Dans la présente demande de brevet, lorsque l'on indique que deux pièces sont distinctes, cela signifie que ces pièces sont séparées. Elles sont :
- positionnées à distance l'une de l'autre, et/ou
- mobiles l'une par rapport à l'autre et/ou
- solidaires l'une de l'autre en étant fixées par des éléments rapportés, cette fixation étant démontable ou non.

Une pièce unitaire monobloc ne peut donc pas être constituée de deux pièces distinctes.

Dans la présente demande de brevet, le terme « solidaire » utilisé pour qualifier la liaison entre deux pièces signifie que les deux pièces sont liées/fixées l'une par rapport à l'autre, selon tous les degrés de liberté, sauf s'il est explicitement spécifié différemment. Par exemple, s'il est indiqué que deux pièces sont solidaires en translation selon une direction X, cela signifie que les pièces peuvent être mobiles l'une par rapport à l'autre sauf selon la direction X. Autrement dit, si on déplace une pièce selon la direction X, l'autre pièce effectue le même déplacement.

Les termes « sensiblement », « environ », « de l'ordre de » signifient « à 20% près, de préférence à 10% près » ou, lorsqu'il s'agit d'une orientation angulaire, « à 10° près ». Ainsi, une direction sensiblement normale à un plan signifie une direction présentant un angle de 90±10° par rapport au plan.

On utilisera également un repère dont la direction longitudinale ou avant/arrière correspond à l'axe x, la direction transversale ou droite/gauche correspond à l'axe z et la direction verticale ou haut/bas correspond à l'axe y.

Dans la présente demande de brevet, le terme mobile correspond à un mouvement de rotation ou à un mouvement de translation ou encore à une combinaison de mouvements, par exemple la combinaison d'une rotation et d'une translation.

Dans la description détaillée qui suit, il pourra être fait usage du terme « satisfaisant » pour désigner un rendement ou la taille d'un paquet, un rendement ou une taille de paquet satisfaisant s'entend comme permettant la récolte d'au moins 250 balles par heure, de préférence de 320 balles par heure.

Dans la description détaillée qui suit, il pourra être fait usage du terme « petite » pour désigner une exploitation. Une petite exploitation s'entend comme une exploitation réalisation moins de 40 000 balles par an.

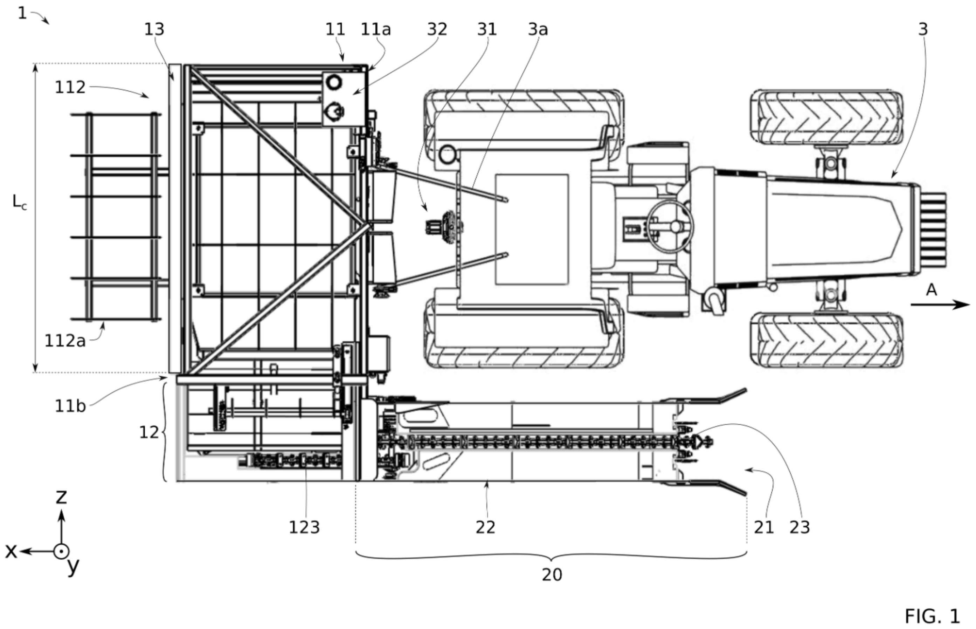

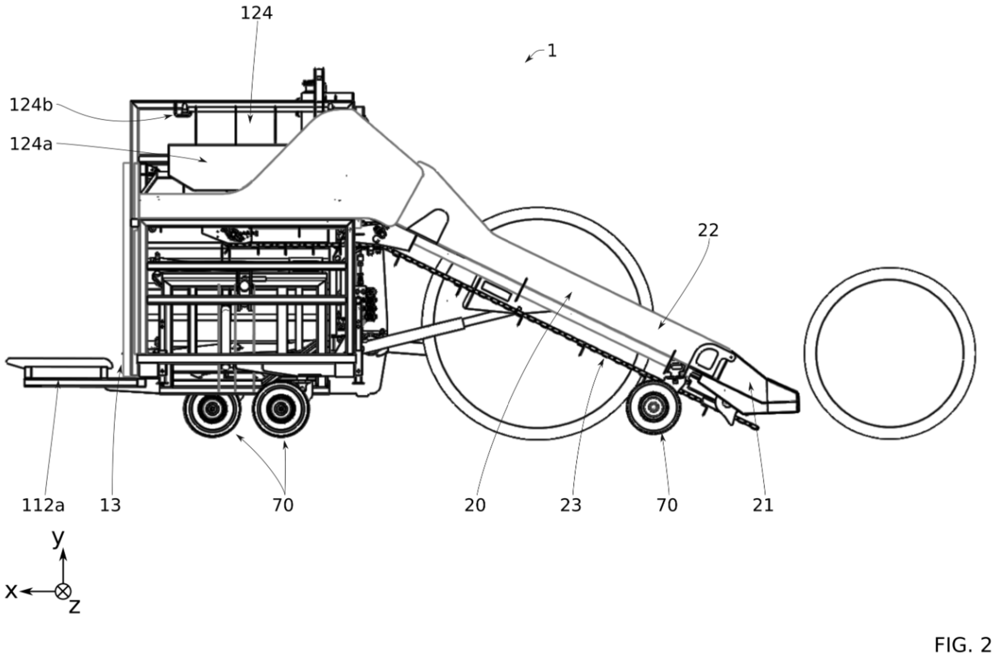

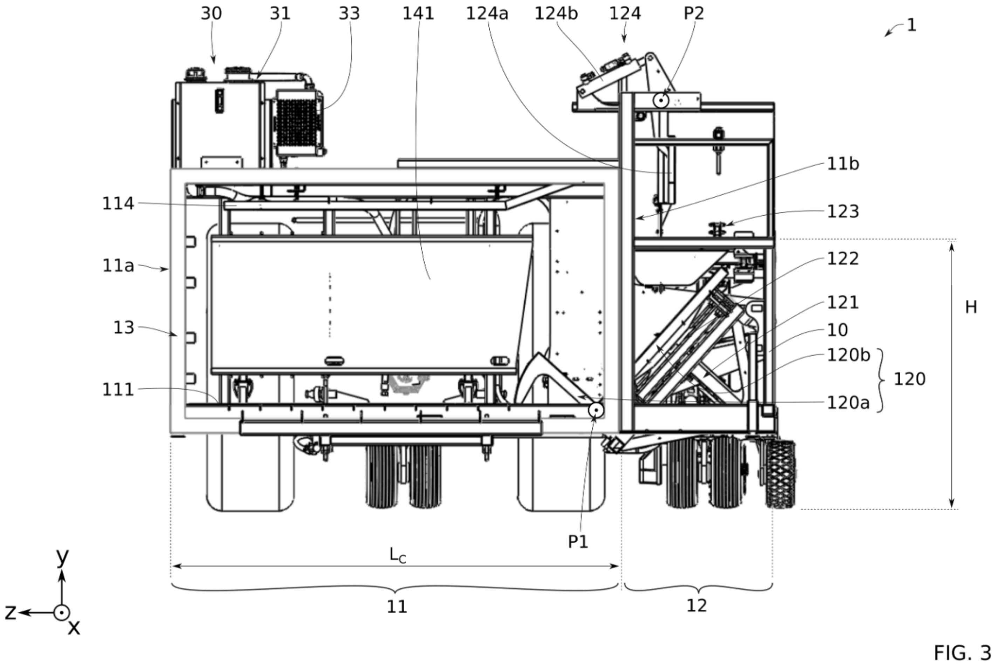

La présente invention concerne un groupeur 1 de balles 2a, notamment de foin ou de paille. Un groupeur 1 va maintenant être décrit en référence aux figures 1 à 7.

Un groupeur 1 est en général configuré pour avancer selon une direction principale d'avancement A. Le groupeur 1 peut avancer grâce à un tracteur 3 ou par ses propres moyens. Le groupeur 1 est habituellement configuré afin de ramasser des balles 2a présente au sol et les grouper afin de former un paquet 2. Le paquet 2 est ensuite éjecté du groupeur 1 au sol et récupéré par un autre engin agricole.

Ainsi, selon un exemple, le groupeur 1 comprend un dispositif de ramassage 20 configuré pour ramasser des balles 2a. Les balles 2a présentant une direction longitudinale I_{b} et sont disposées sur un sol. De préférence, cette direction longitudinale I_{b} est parallèle à la direction principale d'avancement A du groupeur 1. Le dispositif de ramassage 20 peut également réaliser l'acheminement des balles 2a selon une direction d'acheminement contenue dans un plan vertical et parallèle à la direction principale d'avancement A jusqu'à une zone de sortie 12. Selon un exemple, l'acheminement est exécuté en maintenant la direction longitudinale I_{b} des balles 2a parallèle à un plan vertical comprenant la direction principale d'avancement A.

Selon un exemple, le groupeur 1 comprend une chambre de groupement 11 de balles 2a permettant de recevoir les balles 2a acheminées par le dispositif de ramassage 20.

La chambre de groupement 11 comprend un plancher 111. Selon un exemple, le plancher 111 peut supporter plusieurs balles 2a en maintenant la direction longitudinale I_{b} des balles 2a parallèle à un plan vertical comprenant la direction principale d'avancement A. De préférence, les balles 2a sont disposées côte à côte selon une direction de groupement Z perpendiculaire à ladite direction principale d'avancement A. Le groupement de balles 2a peut ainsi permettre de former une partie au moins du paquet 2 de balles 2a. Selon un exemple, le plancher 111 est au moins en partie fixe.

La chambre de groupement 11 comprend également un dispositif de transit 120. Le dispositif de transit 120 peut permettre de déplacer chaque balle 2a de la zone de sortie 12 vers la chambre de groupement 11, plus précisément vers l'entrée 11b de la chambre de groupement 11. Selon un exemple, le déplacement de chaque balle 2a depuis la zone de sortie 12 est réalisé par gravité. Le dispositif de transit 120 comprend une rampe 120b et une surface de réception 120a. Selon un exemple, le dispositif de transit 120 est monté mobile en rotation autour d'un axe horizontal, dit de basculement P1 permettant au dispositif de transit 120 de varier entre deux positions. Selon un exemple, le dispositif de transit 120 peut ainsi être dans une première position dans laquelle la rampe 120b est inclinée par rapport à la verticale et la surface de réception 120a est inclinée par rapport à l'horizontale. Ainsi, chaque balle 2a peut glisser sur la rampe 120b par gravité depuis la zone de sortie 12 du dispositif de ramassage 20 jusqu'à parvenir en butée sur la surface de réception 120a. Selon un exemple, le dispositif de transit 120 peut être dans une deuxième position dans laquelle la rampe 120b se redresse en direction de la verticale, de préférence en étant sensiblement à la verticale. La surface de réception 120a peut ainsi être positionnée de sorte à former une partie du plancher 111.

Selon un exemple, le groupeur 1 comprend un premier actionneur 122 permettant de faire translater la rampe 120b selon la direction de groupement Z, depuis la deuxième position. La rampe 120b peut alors exercer sur les balles 2a un effort tendant à déplacer les balles 2a à l'intérieur de la chambre de groupement 11 depuis la surface de réception 120a en direction d'un fond de la chambre 11a jusqu'à la formation d'un paquet.

La chambre de groupement 11 comprend une ouverture de sortie 112. Selon un exemple, l'ouverture de sortie 112 permet de laisser sortir le paquet 2 formé du groupeur 1.

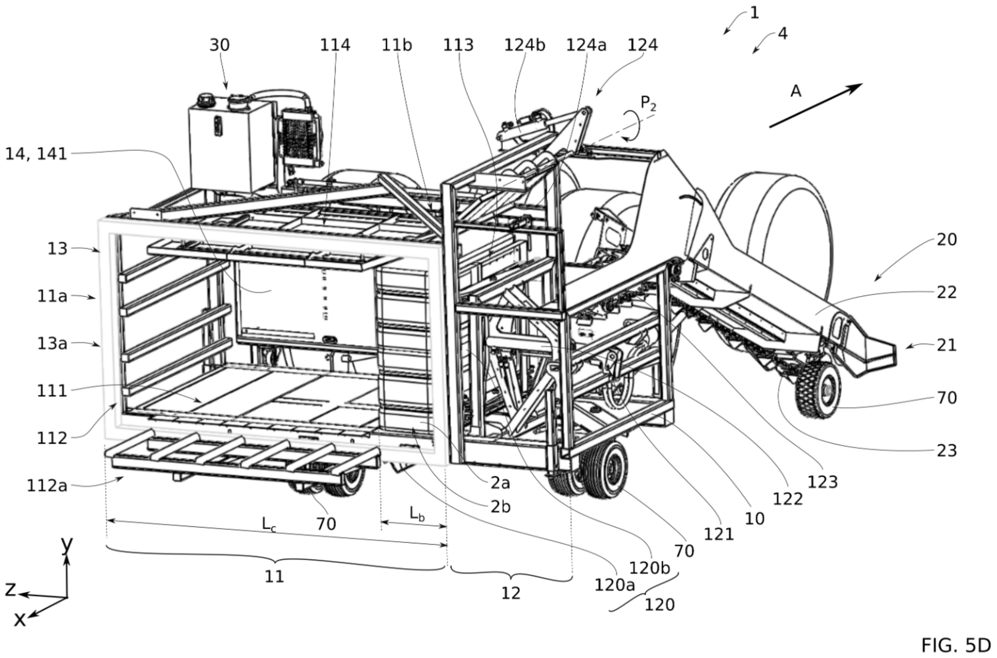

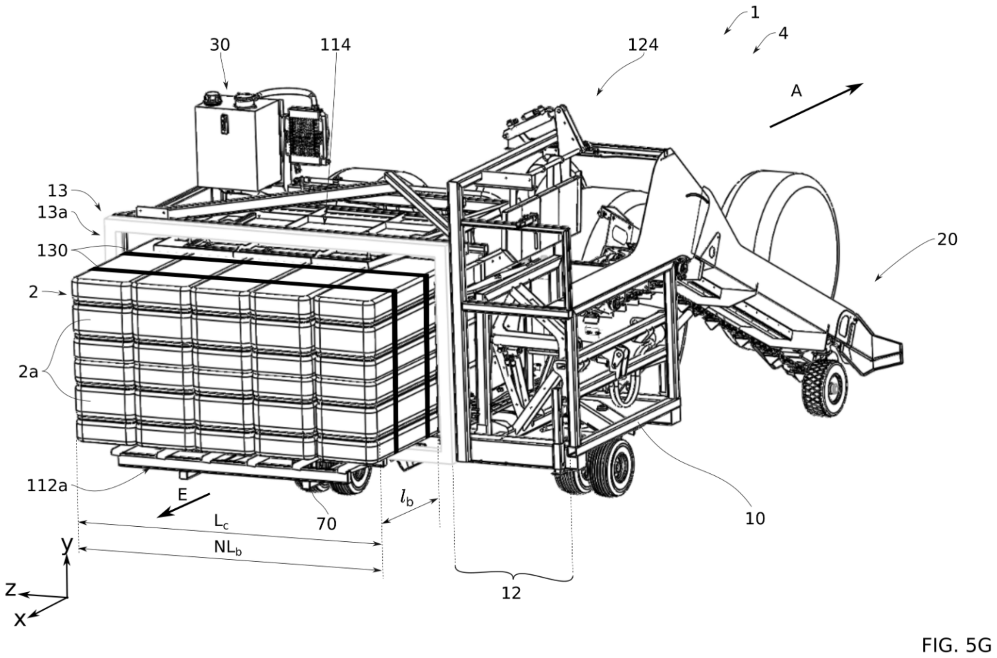

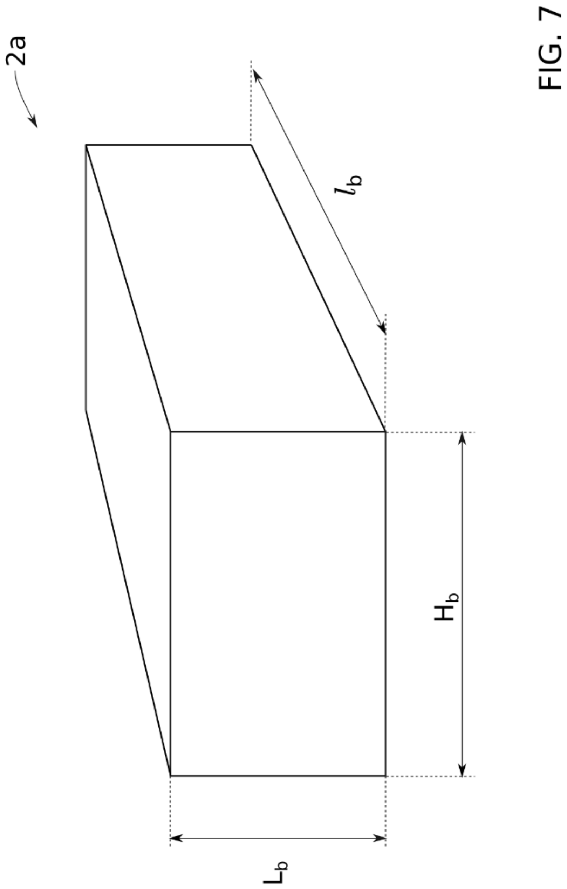

Selon un exemple, le groupeur 1 est utilisé dans le groupement de balles 2a parallélépipédiques illustrée en figure 7. Les balles 2a peuvent ainsi présenter une dimension longitudinale I_{b} ainsi qu'au moins une dimension transversale L_{b}. La dimension longitudinale I_{b} correspond à la plus grande dimension d'une balle 2a. Les balles 2a peuvent présenter également une dimension verticale ou hauteur H_{b}. Les dimensions transversale et verticale d'une balle 2a s'entendent suivant le positionnement d'une balle 2a dans la chambre de groupement 11. La balle 2a peut par exemple présenter une dimension longitudinale I_{b} inférieure ou égale à 110 cm (centimètres), de préférence inférieure ou égale à 100 cm, de préférence inférieure ou égale à 80 cm, de préférence égale à 75cm. Les deux dimensions transversales L_{b} et verticale H_{b} peuvent être sensiblement de même dimension. La balle 2a peut présenter par exemple une dimension transversale L_{b} égale à 36 cm. La balle 2a peut, par exemple, présenter une dimension verticale H_{b} égale à 46 cm. Le groupement d'au moins deux balles 2a peut former une pile 2b, illustré en figure 5D, de balles 2a. Le groupement d'au moins quatre balles 2a peut former un paquet 2 de balles 2a, illustré en figure 5G.

Dans la suite de la description, d'autres éléments et caractéristiques du groupeur 1 seront décrits en considérant un ensemble 4 composé d'un groupeur 1 et du déplacement d'une pluralité de balles 2a.

Le groupeur 1 comprend le dispositif de ramassage 20. Selon un exemple, le dispositif de ramassage 20 s'étend sensiblement suivant la direction longitudinale x. Le dispositif de ramassage 20 s'étend dans un plan vertical et parallèle à la direction principale d'avancement A. Le dispositif de ramassage 20 comprend un orifice d'entrée 21. Selon un exemple, l'orifice d'entrée 21 permet l'introduction des balles 2a dans le dispositif de ramassage 20. L'orifice d'entrée 21 peut être à une distance de l'ordre de quelques centimètres du sol afin d'entrer en contact avec les balles 2a présentes sur le sol.

L'orifice d'entrée 21 peut présenter des guides permettant de diriger la balle 2a dans le dispositif de ramassage 20. Les guides sont positionnés de sorte à ce que la balle 2a s'introduise dans le dispositif de ramassage 20 par une face comprenant sa dimension transversale L_{b} et sa dimension verticale H_{b}. Ainsi, la balle 2a peut s'introduire avec sa dimension longitudinale I_{b} parallèle à la direction principale d'avancement A.

Le dispositif de ramassage 20 comprend également un mécanisme de transport 23. Le mécanisme de transport 23 permet, selon un exemple, d'acheminer la balle 2a de l'orifice d'entrée 21 vers la zone de sortie 12. De façon similaire, le mécanisme de transport 23 permet, selon un exemple, d'acheminer la balle 2a selon une direction d'acheminement contenue dans un plan vertical et parallèle à la direction principale d'avancement A. La balle 2a peut alors par le biais du mouvement de translation du mécanisme de transport 23 réaliser une ascension du sol vers la zone de sortie 12 située à une hauteur H, de préférence H est supérieure ou égale à 1.3 m. Ainsi, le mécanisme de transport 23 peut présenter une pente par rapport au sol. Le mécanisme de transport 23 peut, de préférence, être une chaine présentant des crochets permettant d'agripper les balles 2a, ou de préférence être une bande rotative. Le mécanisme de transport 23 est positionné de préférence de façon centrée par rapport à l'orifice d'entrée 21 afin de permettre un appui stable de la balle 2a sur le mécanisme de transport 23.

La hauteur H peut correspondre à la hauteur maximale de positionnement d'une balle 2a. Ainsi, le groupeur 1 aura une dimension verticale environ supérieure ou égale à H+L_{b}. Cette dimension permet au groupeur 1 d'avoir une dimension verticale compacte et lui permet ainsi de passer sous les ponts lors de sa circulation sur route. De plus, la dimension verticale du groupeur 1 est limitée afin, selon un exemple, de pouvoir l'utiliser sur des exploitations présentant une pente et ainsi réduire voire supprimer le risque de chavirage.

Le dispositif de ramassage 20 comprend également des parois latérales 22. Les parois latérales 22 sont de préférence positionnées de part et d'autre du mécanisme de transport 23. Avantageusement, les parois latérales 22 sont positionnées afin de correspondre sensiblement à la hauteur H_{b} d'une balle 2a. Les parois latérales 22 permettent ainsi de maintenir les balles 2a sur le mécanisme de transport 23 selon la direction longitudinale I_{b} des balles 2a. De préférence, les parois latérales 22 sont positionnées de part et d'autre du mécanisme de transport 23 de façon symétrique. De préférence, les parois latérales 22 sont espacées sensiblement suivant l'axe z d'une dimension inférieure ou égale à 55 cm, de préférence inférieure ou égale à 53 cm. De préférence, les parois latérales 22 sont espacées sensiblement suivant l'axe z d'une dimension égale à 53 cm pour des balles 2a présentant une hauteur H_{b} égale à 46 cm.

La balle 2a est ainsi transportée du sol vers la zone de sortie 12.

Selon un exemple, la zone de sortie 12 est assimilée à une zone de stockage de la balle 2a avant son introduction dans la chambre de groupement 11.

Le zone de sortie 12 comprend un mécanisme de sortie 123. Selon un exemple, le mécanisme de sortie 123 permet d'acheminer la balle 2a dans la zone de sortie 12 sur l'intégralité de sa dimension longitudinale I_{b}. Selon un exemple, le mécanisme de sortie 123 permet également de supporter, au moins en partie, la balle 2a lorsque la balle 2a est positionnée dans la zone de sortie 12. La balle 2a peut alors passer d'une position inclinée par rapport au sol, à une position sensiblement parallèle par rapport au sol.

Selon un exemple, le mécanisme de sortie 123 est positionné en décalé par rapport au mécanisme de transport 23. D'une manière similaire, selon un exemple, le mécanisme de sortie 123 est positionné de façon excentré par rapport à la hauteur H_{b} de la balle 2a. La balle 2a peut ainsi être au moins en partie en appui sur le mécanisme de sortie 123. La partie en appui pouvant représenter une part inférieure par rapport à la partie non en appui. La balle 2a peut être ainsi positionnée instablement sur le mécanisme de sortie 123.

La balle 2a pouvant ainsi tomber sous l'effet de son poids et de la gravité. La balle 2a peut être retenue dans la zone de sortie 12 par le biais d'un système de rétention 124 positionné en regard du mécanisme de sortie 123.

Le système de rétention 124, selon un exemple, permet ainsi de retenir par contact avec une face de la balle 2a, la balle 2a sur sa dimension longitudinale I_{b}. La balle 2a est alors au moins en partie en appui sur le système de rétention 124 lorsque la balle 2a arrive dans la zone de sortie 12. De préférence, la balle 2a est ainsi retenue dans la zone de sortie 12 avant son introduction dans la chambre de groupement 11.

Le système de rétention 124 comprend une surface de rétention 124a. Selon un exemple, la surface de rétention 124a est montée mobile en rotation autour d'un axe horizontal, dit de pivotement P2 permettant au système de rétention 124 de varier entre deux positions. De manière similaire, la surface de rétention 124a peut varier entre deux positions, une position ouverte et une position fermée.

Le système de rétention 124 comprend également un troisième actionneur mécanique 124b. Le troisième actionneur mécanique 124b permet de passer la surface de rétention 124a de sa position fermée à ouverte et inversement.

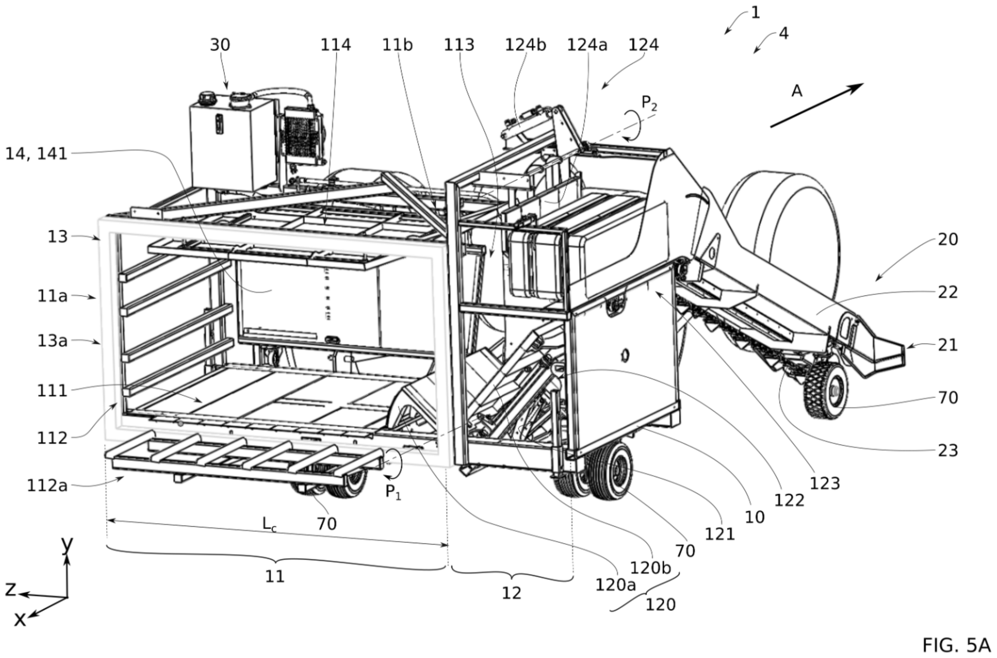

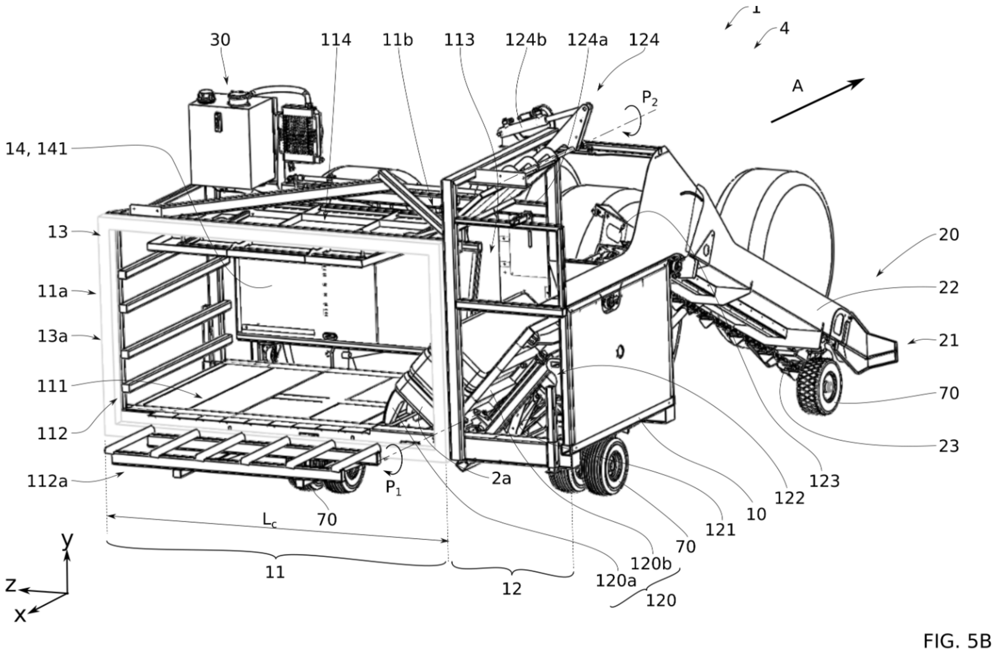

Les deux positions vont maintenant être décrites en fonction des figures 5A et 5B.

Selon un exemple, lors de l'arrivée dans la zone de sortie 12 d'une balle 2a, le système de rétention 124, de préférence la surface de rétention 124a est en position fermée. La surface de rétention 124a est donc de préférence positionnée à la verticale par rapport au sol. La surface de rétention 124a peut alors être au moins en partie en contact avec la balle 2a. La balle 2a peut ainsi être maintenue dans la zone de sortie 12 (voir figure 5A).

Selon un exemple, le système de rétention 124 se désactive, le troisième actionneur 124b, de préférence un actionneur mécanique linéaire, s'active (voir figure 5B). L'activation du troisième actionneur 124b linéaire peut alors entrainer le passage de la surface de rétention 124a d'une position fermée à une position ouverte. La surface de rétention 124a peut ainsi pivoter jusqu'à une position inclinée par rapport à la verticale suivant l'axe de pivotement P2 et laisser la balle 2a tomber par effet de gravité dans la chambre de groupement 11.

Selon un exemple, la balle 2a tombe par effet de gravité sur le dispositif de transit 120 positionné suivant sa première position. De préférence, le dispositif de transit 120 peut être positionné à l'entrée 11b de la chambre de groupement 11.

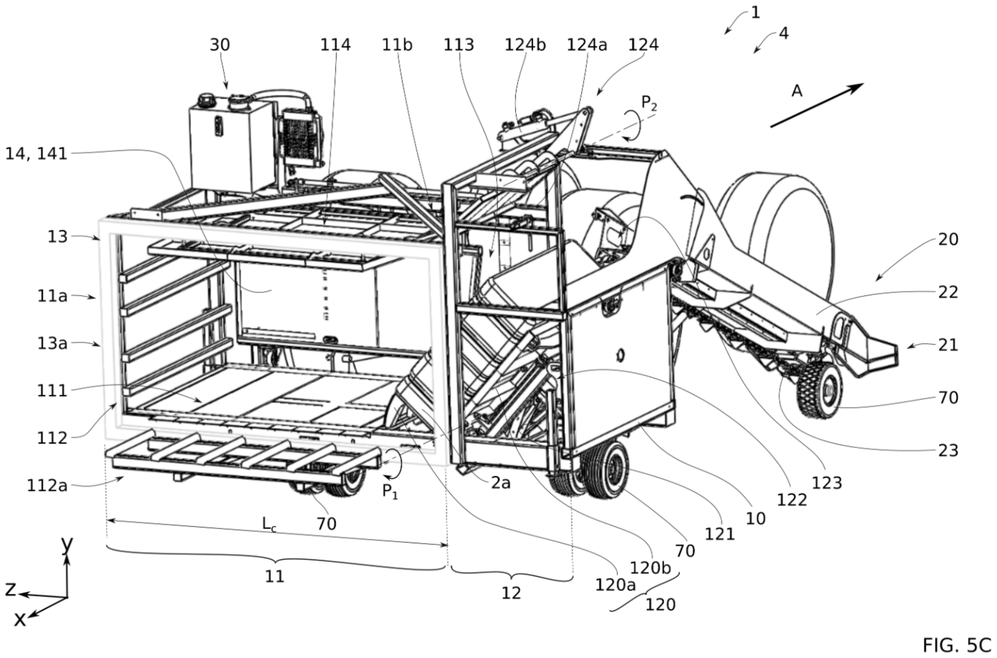

Selon un exemple, le dispositif de transit 120 permet de supporter au moins une balle 2a. L'au moins une balle 2a présente selon un exemple au moins deux surfaces en contact avec le dispositif de transit 120. De préférence, une surface de balle 2a est en contact avec la surface de réception 120a. De préférence, une autre surface de balle 2a est en contact avec la rampe 120b (voir figure 5B). De préférence, le dispositif de transit 120 permet de supporter au moins deux balles 2a (voir figure 5C).

Selon un exemple, la rampe 120b est inclinée par rapport à la verticale suivant un angle sensiblement supérieur ou égal à 20°, de préférence supérieur ou égal à 40°, de préférence égal à 48°. Cette inclinaison permet à la balle 2a de glisser sur la rampe par gravité sous l'effet de son poids.

Selon un exemple, la surface de réception 120a forme un angle de préférence sensiblement égal à 90° par rapport au plan dans lequel est compris la rampe 120b. De manière similaire, la surface de réception 120a s'étend perpendiculairement à un plan dans lequel s'étend principalement la rampe 120b.

Selon un exemple, le dispositif de transit 120 passe de la première position à la deuxième position après qu'au moins deux balles 2a soient positionnées sur le dispositif de transit 120.

Selon un exemple, la rampe 120b et la surface de réception 120a sont deux pièces distinctes mais solidaires lors du passage de la première position à la deuxième position.

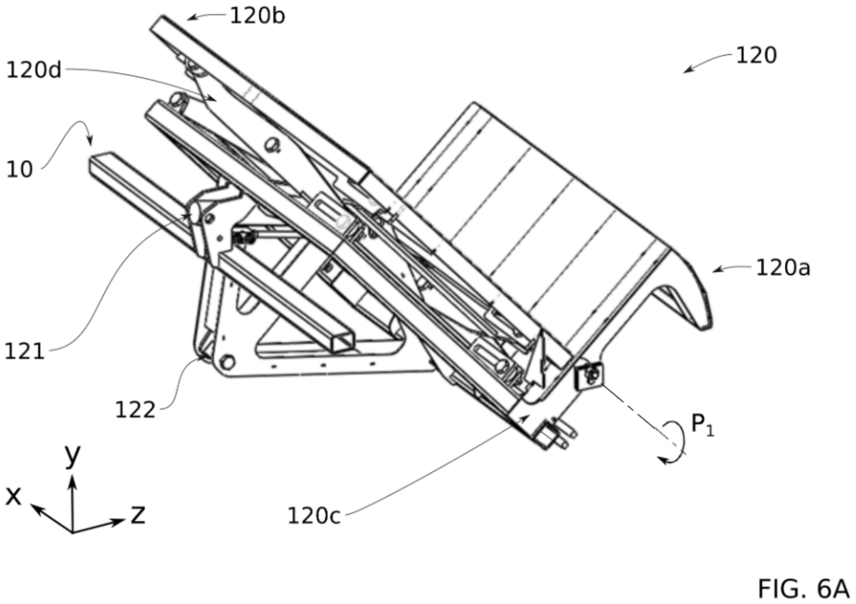

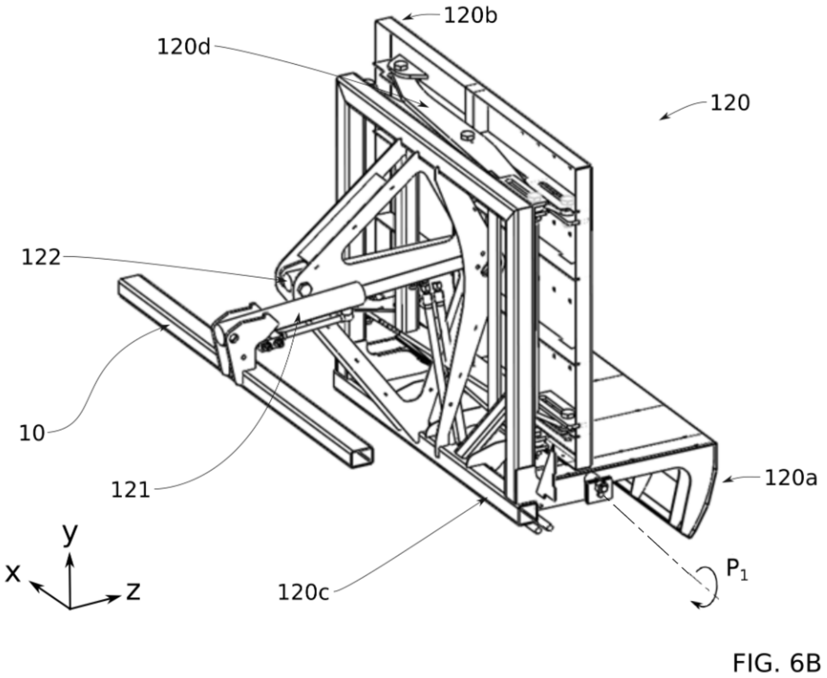

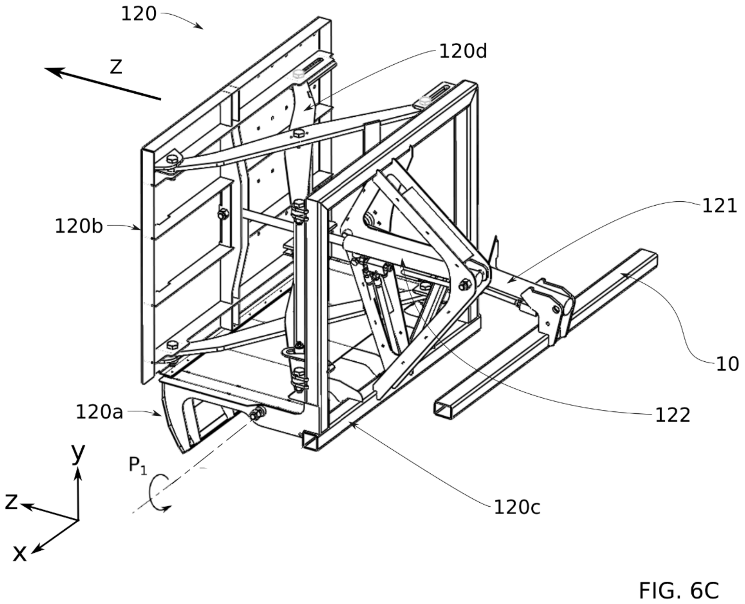

Comme illustré sur l'exemple des figures 6A, 6B et 6C, le dispositif de transit 120 comprend une structure de support 120c portant la surface de réception 120a et la rampe 120b. La structure de support 120c présente par exemple une forme de cadre. La structure de support 120c est montée en rotation sur le groupeur autour de l'axe de basculement P1 afin de passer sélectivement de la première position à la deuxième position. L'axe de basculement P1 est parallèle à la direction d'avancement A du groupeur.

Selon un exemple, le passage de la première position à la deuxième position est réalisé par le deuxième actionneur mécanique 121. De préférence, le deuxième actionneur mécanique 121 est un actionneur linéaire. De préférence, le deuxième actionneur mécanique 121 est un actionneur linéaire, tel un vérin, hydraulique, électrique ou pneumatique. Le deuxième actionneur mécanique 121 peut être relié par une extrémité à la structure de support 120c. Le deuxième actionneur mécanique 121 peut être relié par une autre extrémité à un montant 10, de la zone de sortie 12, du groupeur 1. Comme illustré en figure 6B et en figure 5D, le déploiement du deuxième actionneur 121 peut permettre au dispositif de transit 120 de réaliser une rotation suivant l'axe de basculement P1.

Selon un exemple, le dispositif de transit 120 est de préférence configuré de sorte que dans la deuxième position la rampe 120b se redresse en direction de la verticale, de préférence en étant sensiblement à la verticale, et la surface de réception 120a est positionnée de sorte à former une partie du plancher 111, sensiblement à l'horizontale et sensiblement coplanaire avec le plancher 111. Le plan dans lequel s'étend le plancher 111 de la chambre de groupement 11 peut être quelques millimètres, voire quelques centimètres, de préférence moins de 5 centimètres, au-dessous de la surface de réception 120a, lorsque cette dernière est dans la deuxième position. Ainsi, la surface de réception 120a peut être positionnée à l'horizontale par rapport au sol sensiblement sur un même plan que le plancher 111. De manière similaire, la rampe 120b est positionnée de manière verticale. Selon un exemple, les deux balles 2a sont alors empilées afin de former une pile 2b suivant la direction verticale sur la surface de réception 120a.

Selon un exemple, la surface de réception 120a est solidaire de la structure de support 120c. Elle est par exemple fixée à la structure de support 120c. La rampe 120b est quant à elle montée coulissante sur la structure de support 120c. Ainsi, lorsque la structure de support 120c bascule autour de l'axe de basculement P1, elle entraine en rotation la rampe 120b pour passer sélectivement de la première position à la deuxième position.

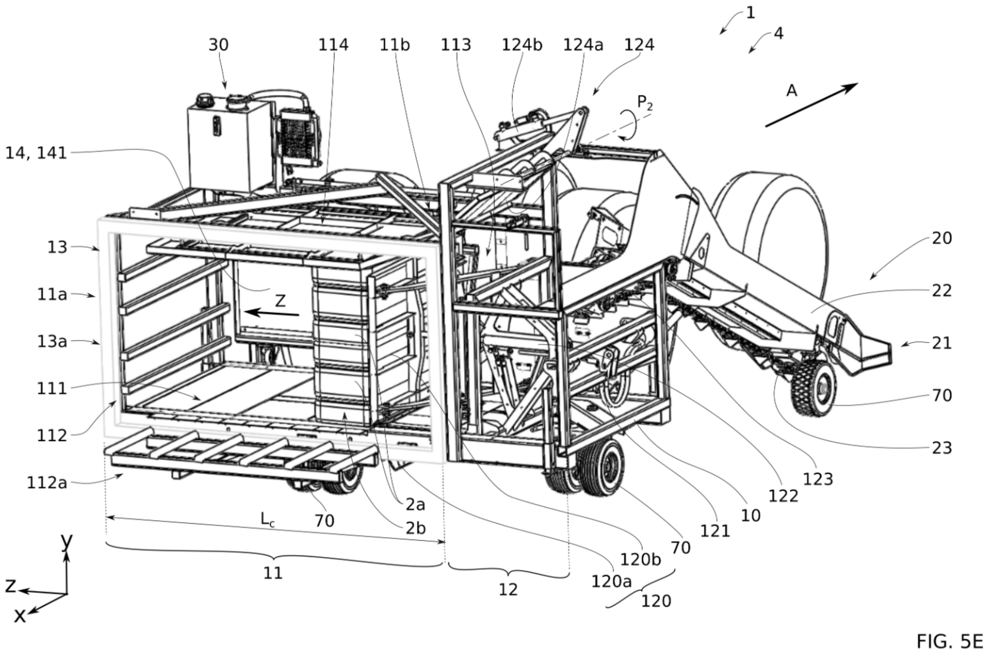

En outre, un premier actionneur 122 permet de provoquer le déplacement en translation de la rampe 120b par rapport à la structure de support 120c et à la surface de réception 120a. De manière similaire, le déploiement du premier actionneur 122, visible en figure 6C et en figure 5E, permet le déplacement en translation selon la direction de groupement Z de la rampe 120b par rapport à la structure de support 120c et à la surface de réception 120a. Ce premier actionneur 122 est activé lorsque le dispositif de transit 120 est dans la deuxième position. Ainsi, la surface de réception 120a forme une partie du plancher 111 et la translation de la rampe 120b provoque le déplacement de la balle 2a ou de la pile 2b de balles 2a vers l'intérieur de la chambre de groupement 11. De préférence, la longueur de la course de cette translation permet aux balles 2a de passer au-delà de la surface de réception 120a. Les balles peuvent ainsi parvenir jusque sur la partie fixe du plancher 111.

Selon un exemple la surface de réception 120a est verrouillée en position par la non-alimentation du deuxième actionneur mécanique 121. La non-alimentation du deuxième actionneur mécanique 121 peut permettre de s'assurer que la surface de réception 120a ne se déplace pas lors du mouvement de la rampe 120b.

Selon un exemple, le dispositif de transit comporte au moins un et de préférence deux systèmes en croix 120d illustrés aux figures 6A et 6B. Le système en croix 120d permet de guider le mouvement de translation de la rampe 120b par rapport à la surface de réception 120a.

Selon un exemple, le premier actionneur 122 mécanique peut alors être activé. Le premier actionneur 122 permet de déplacer, ou de translater, la rampe 120b de la deuxième position à une troisième position illustrée en figure 5E suivant la direction de groupement Z. De manière similaire, la rampe 120b coulisse relativement à la surface de réception 120a. De manière analogue, la rampe 120b peut translater par rapport à la surface de réception 120a par le déploiement du système en croix 120d. Le système en croix 120d comprend des montants positionnés de sorte à former une croix. Les deux montants sont articulés en rotation au niveau d'une portion centrale de chaque montant. Chaque montant est relié par une de leurs extrémités à la structure de support 120c et par leur autre extrémité à la rampe 120b. Chaque montant est relié, par une première de ces extrémités à l'un parmi la structure de support 120c et à la rampe 120b, par une liaison linéaire annulaire. Chaque montant est relié, par la seconde de ces extrémités à l'autre parmi la structure de support 120c et à la rampe 120b, par une liaison pivot. Les pivots et linéaires annulaires permettent ainsi un déploiement du système en croix 120d lors de l'actionnement du premier actionneur 122. Le système en croix 120d permet le guidage en translation de la rampe 120b lors de l'actionnement du premier actionneur 122. Ce système est particulièrement robuste, précis et peu couteux. D'autres systèmes de guidage sont possibles. Une solution basée sur l'utilisation de glissières ou de plusieurs vérins ne présenterait pas les mêmes avantages en termes de budget.

Dans l'exemple illustré, le dispositif de transit comprend deux systèmes en croix 120d, de préférence superposés verticalement. Le premier actionneur 122 est disposé entre les deux systèmes en croix 120d.

Ainsi, la pile 2b de balles 2a précédemment constituée peut être déplacée suivant la direction de groupement Z. Selon un exemple, la pile 2b de balles 2a est déplacée d'une dimension sensiblement égale à la dimension transversale L_{b} des balles. Plus précisément, la rampe 120b peut se déplacer d'une distance supérieure ou égale à X fois la dimension transversale L_{b} d'une balle 2a, la dimension transversale étant parallèle à la direction de groupage, de préférence X>1*L_{b} et de préférence X>1.2*L_{b}. La distance de déplacement permet la translation d'une pile 2b complète en dehors de la surface de réception 120a vers le fond 11a de chambre de groupement 11.

Selon un exemple, le premier actionneur 122 est un actionneur linéaire tel un vérin, de préférence hydraulique, électrique ou pneumatique. Le premier actionneur 122 permet ainsi un mouvement suivant une seule direction sans entrainer de rotation des balles 2a.

Selon un exemple, lors du déploiement du premier actionneur 122 la pile 2b de balles 2a est comprimée verticalement par un dispositif plaquant 114, présent dans la chambre de groupement 11. Le dispositif plaquant 114 peut être une plaque ou une grille. De préférence, le dispositif plaquant 114 présente au moins une partie en contact avec chaque pile 2b de balles 2a présente dans la chambre de groupement 11.

Selon un exemple, après le passage du dispositif de transit 120 d'une deuxième position à une troisième position, le dispositif de transit 120 retourne à sa première position pour accueillir de nouvelles balles 2a.

Selon un exemple, chaque nouvelle pile 2b créée va pousser la pile 2b précédente lors de l'activation du premier actionneur 122 vers le fond 11a de la chambre de groupement 11.

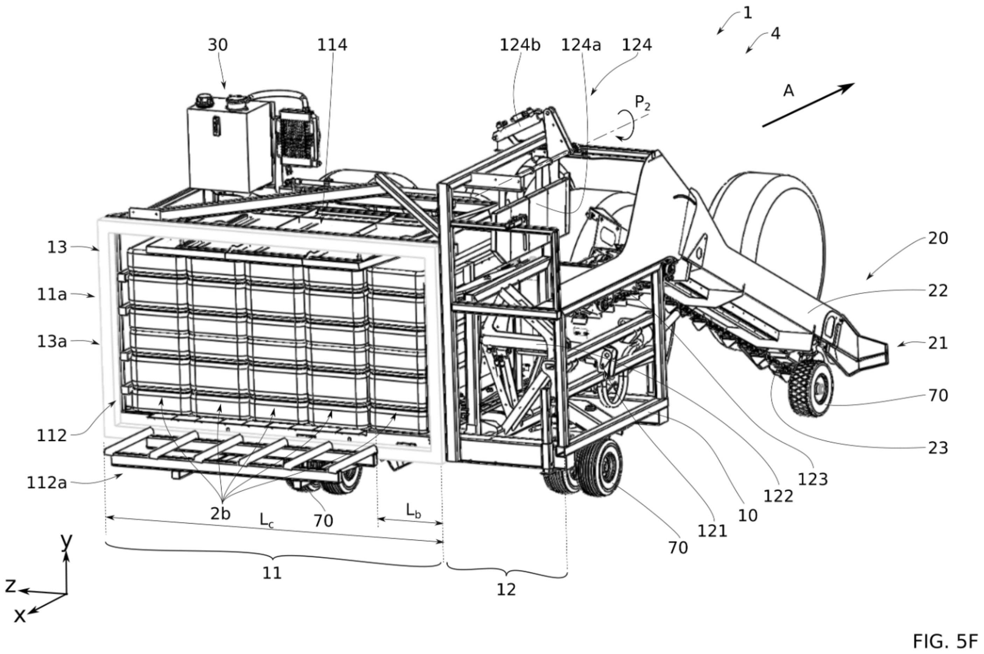

Selon un exemple, l'intégration des balles 2a dans la chambre de groupement 11 se répète jusqu'à une au moins 5^{ème} pile 2b afin de former un paquet 2. De préférence, l'au moins 5^{ème} pile 2b intégrée dans la chambre de groupement 11 est au moins en partie en contact avec la surface de réception 120a assimilable au plancher 111 (voir figure 5F). De préférence, l'au moins 5^{ème} pile 2b intégrée dans la chambre de groupement 11 est au moins en partie à la fois en contact avec la surface de réception 120a et avec le plancher 111. La surface de réception 120a peut présenter une dimension transversale inférieure ou égale à la dimension transversale L_{b} d'une balle 2a, de préférence égale à la dimension transversale L_{b} d'une balle 2a. Cela permet d'avoir une dimension de chambre de groupement 11 réduite. En effet, la surface de réception 120a peut ainsi faire partie du plancher 111 permettant l'insertion d'une pile 2b supplémentaire dans une dimension de chambre 11 minimale.

La chambre de groupement 11 peut contenir ainsi jusqu'à au moins 5 piles 2b d'au moins deux balles 2a. La chambre de groupement 11 peut alors présenter une dimension transversale L_{c} de préférence égale à N*L_{b} avec N étant le nombre de pile 2b de balle 2a. De préférence N est égale ou supérieure à 5, de préférence N est égale à 5. De manière similaire, la chambre de groupement 11 peut alors présenter une dimension transversale L_{c} de préférence égale à N*L_{b} avec N étant le nombre de balles 2a positionnées côte à côte sur le plancher 111 de la chambre de groupement 11. Ainsi, la chambre de groupement 11 permet de constituer un paquet 2 de balles 2a d'au moins 8 balles, de préférence d'au moins 10 balles. Selon un exemple, la chambre de groupement 11 peut permettre de constituer un paquet 2 de balles 2a de préférence d'au moins 12 balles, de préférence d'au moins 14 balles. La chambre de groupement 11 permet ainsi de réaliser un rendement suffisant tout en réduisant la taille de la chambre de groupement 11. Ainsi, le nombre de balles 2a dans la chambre de groupement 11 peut dépendre des dimensions des balles 2a et/ou des dimensions de la chambre de groupement 11.

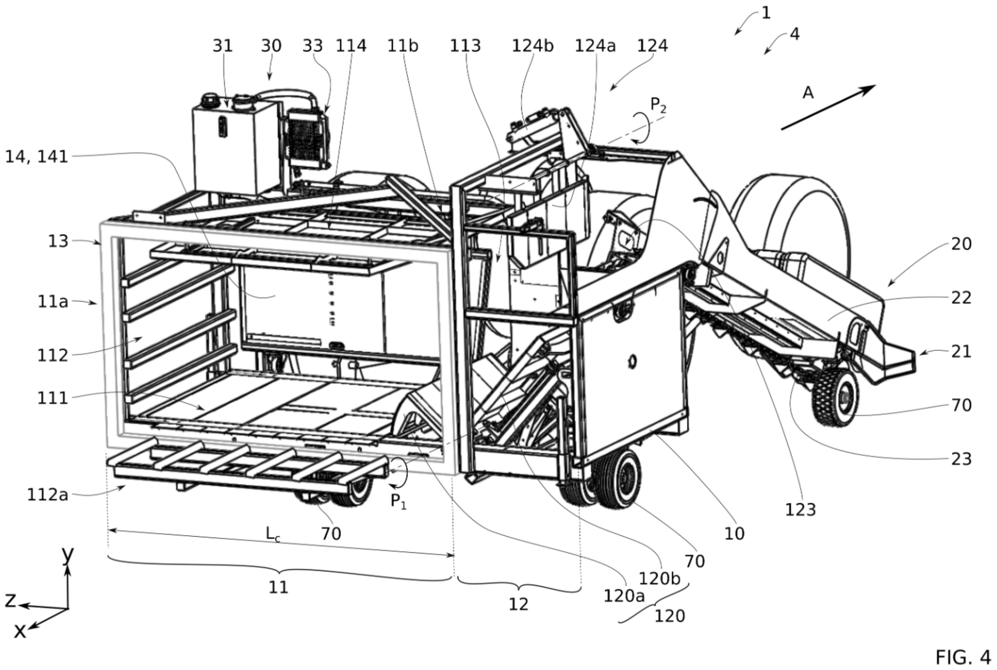

La chambre de groupement 11 comprend un système de poussée 14 (visible à la figure 4). Le système de poussée 14 permettant d'éjecter le paquet 2 de la chambre de groupement 11. Le système de poussée 14 peut permettre l'éjection du paquet 2 suivant une direction d'éjection E sensiblement parallèle et opposée à la direction principale d'avancement A.

Selon un exemple, le système de poussée 14 comprend une plaque d'éjection 141 positionnée de sorte à permettre l'éjection du paquet 2 par l'arrière du groupeur 1 suivant la direction principale d'avancement A. Les balles 2a peuvent ainsi sortir du groupeur 1 en gardant leur dimension longitudinale I_{b} parallèle à la direction principale d'avancement A.

Selon un exemple, la plaque d'éjection 141 est une plaque ou une grille étant au moins en partie en contact avec toutes les piles 2b de balles 2a du paquet 2. De manière similaire, la plaque d'éjection 141 est au moins en partie en contact avec toutes les balles 2a du paquet 2. Ainsi, cela permet à chacune des balles 2a du paquet 2 de sortir par l'ouverture de sortie 112 à la même vitesse et de façon homogène.

Selon un exemple, l'ouverture de sortie 112 présente les mêmes dimensions transversales et verticales que la chambre de groupement 11.

L'ouverture de sortie 112 comprend un système de liage configuré pour lier les balles d'un même paquet lors de l'éjection du paquet hors du groupeur. De préférence, le système de liage comprend un système de cerclage 13. Il est configuré pour déployer et fermer un lien 130 autour du paquet 2. Ce système de cerclage 13 comprend un cadre 13a rectangulaire, encadrant l'ouverture de sortie 112. De manière similaire, le cadre 13a rectangulaire entoure l'ouverture de sortie 112. Le cadre 13a peut permettre ainsi de réaliser un cerclage autour du paquet 2. De manière similaire, le cadre 13a rectangulaire entoure le paquet 2 de balles 2a. Selon un exemple, une partie du cadre 13a peut être intégré dans le plancher 111 de la chambre de groupement 11.

Selon un exemple, le cadre 13a rectangulaire du système de cerclage 13 réalise un cerclage du paquet 2. Le cadre 13a peut comprendre un dispositif de positionnement de lien 130. Le dispositif de positionnement de lien pouvant être configuré de sorte à pousser le lien 130 le long du cadre 13a. Selon un exemple, le cadre 13a est creux permettant ainsi la poussée du lien 130 dans le cadre 13a. Le dispositif de positionnement de lien 130 pouvant être configuré de sorte à positionner au moins un lien, de préférence une pluralité de liens.

Selon un exemple, le cadre 13a peut comprendre également une tête de cerclage. La tête de cerclage étant configurée de sorte à tendre et fermer l'au moins un lien autour du paquet 2. La tête de cerclage peut être configurée pour apposer un lien 130 sur le paquet 2. Le cadre 13a comprend au moins un lien 130, de préférence une pluralité de lien 130. Dans la suite, on considère à titre non-limitatif que le cadre 13a, et par extension le système de cerclage 13, comprend plusieurs liens 130.

Selon un exemple, lorsque les liens 130 forment un contour fermé ou sensiblement fermé à l'intérieur du cadre 13a, les liens 130 sont rétractés. Cette rétractation provoque une sortie des liens 130 hors du cadre 13a pour se positionner en contact avec le paquet 2. Cette rétractation est par exemple assurée par la tête de cerclage. Le système de cerclage 13 permet ainsi de lier le paquet 2. Le cerclage peut être réalisé par les liens 130 illustrés en figure 5G ou par un film plastique non représenté. Selon un exemple, les liens 130 sont positionnés perpendiculairement à la direction d'éjection E et à la direction principale d'avancement A. C'est-à-dire que le contour fermé qu'ils forment s'inscrit dans un plan perpendiculaire à l'avancée du groupeur 1. Le contour fermé qu'ils forment s'inscrit dans plan perpendiculaire à la direction d'éjection E du paquet hors de la chambre de groupement 11. Les liens 130 peuvent être en matériau plastique. Les liens 130 peuvent également être en métal.

Selon un exemple, le système de cerclage 13 peut être configuré pour tendre les liens 130. Ainsi, les balles 2a du paquet 2 peuvent être serrées entres elles. La tension appliquée par le système de cerclage 13 peut être sensiblement supérieure ou égale à 500 N (Newton), de préférence supérieure ou égale à 1000 N, de préférence supérieure ou égale à 2000 N, de préférence supérieure ou égale à 3000 N, de préférence supérieure ou égale à 4000 N, de préférence égale à 5000 N.

Selon un exemple, les liens 130 sont fermés au niveau d'une épissure sur le paquet 2. Les liens 130 peuvent être fermés après la réalisation d'un tour du paquet 2. Ainsi, les liens 130 sont fermés afin de maintenir le paquet 2. L'épissure des liens 130 peut être réalisée par soudure, de préférence par friction, ou par application thermique ou par ultrasons. L'épissure des liens 130 peut également être réalisée par assemblage-emboutissage, aussi appelé clinchage.

Selon un exemple, les liens 130 peuvent être positionnés à intervalles réguliers N prédéterminés. Ainsi, le système de poussée 14 peut pousser le paquet 2 jusqu'à une première position d'un premier lien 130. Le système de cerclage 13 peut apposer un premier lien 130 sur le paquet 2. Le premier lien 130 peut être tendu puis soudé par la tête de cerclage. Le premier lien 130 peut ensuite être relâché et venir en contact du paquet 2. Puis, le système de poussée 14 peut continuer la poussée du paquet 2 jusqu'à une deuxième position d'un deuxième lien 130. Le système de cerclage 13 peut apposer un deuxième lien 130 sur le paquet 2. Le deuxième lien 130 peut être tendu puis soudé par la tête de cerclage. Le deuxième lien 130 peut ensuite être relâché et venir en contact du paquet 2. Un nombre N de liens 130 peut être apposé. Le système de poussée 14 peut ensuite pousser le paquet 2 cerclé jusqu'à la sortie complète du paquet 2 de la chambre de groupement 11.

Ce système de liage présente notamment pour avantage un coût et un encombrement très réduits par rapport aux système connus. Il peut être utilisé sur un groupeur indépendamment du dispositif de transit 120 décrit précédemment.

L'ouverture de sortie 112 comprend également une plateforme de sortie 112a. La plateforme de sortie 112a agit comme extension du plancher 111 en dehors de la cage de groupement 11. La plateforme de sortie 112a permet de maintenir le paquet 2 parallèlement au plancher 111 lors de l'éjection du paquet 2 et de son empaquetage par le système de cerclage 13. Le paquet 2 peut ensuite être évacué de la plateforme de sortie 112a par gravité pour atterrir sur le sol. Selon un exemple, l'ensemble des éléments précédemment détaillés entre en mouvement par le biais d'un système hydraulique 30. Le système hydraulique peut comprendre une pompe 31, un réservoir 32 et un radiateur 33 visible en figure 1.

Selon un exemple, les éléments précédemment détaillés sont activés par séquence grâce à des détecteurs non représentés.

Le groupeur 1 peut ainsi présenter une dimension transversale perpendiculaire à la direction principale d'avancement A sensiblement inférieure ou égale à 3,5 m de préférence inférieure ou égale à 3 m de préférence inférieure ou égale à 2,95m. Le groupeur 1 est ainsi compact dans sa dimension transversale et peut circuler facilement sur la route.

Selon un exemple, le groupeur 1 est compact et léger, ainsi le groupeur 1 peut avancer suivant la direction principale d'avancement A en étant porté par le biais de bras de relevage 3a illustré en figure 1. Les bras de relevage 3a peuvent relier le groupeur 1 à un tracteur 3. Plus précisément, les bras de relevage 3a peuvent relier l'arrière du tracteur 3 avec l'avant du groupeur 1. Plus précisément, les bras de relevage 3a peuvent relier l'arrière du tracteur 3 avec l'avant de la chambre de groupement 11 du groupeur 1. Le groupeur 1 peut ainsi être entièrement supporté par le tracteur 3. Ainsi, le groupeur 1 ne touche pas le sol. En plus d'être compacte sur sa dimension transversale, le groupeur 1 peut ainsi être porté. Ainsi, aucune homologation n'est nécessaire pour le transporter sur la route. En effet, un utilisateur peut rouler sans homologation ni autorisation spéciale sur la route avec un outil porté de largeur inférieure à 3,5 m en France et inférieure à 3 m en Europe.

Selon un exemple, le groupeur 1 peut avancer suivant la direction principale d'avancement A en étant tracté par le tracteur 3. Ainsi, de préférence, le groupeur 1 comprend des roues additionnelles 70. Ces roues additionnelles 70 peuvent être des roues non motrices pourvues d'un axe libre décalé, pour un pivotage automatique. Ainsi, ces roues additionnelles 70 ne peuvent pas transmettre d'énergie et peuvent avoir pour fonction le guidage et le support du poids du groupeur 1. Les roues additionnelles 70 peuvent être montées en rotation libre autour d'un axe horizontal, cet axe horizontal étant lui-même monté en rotation libre autour d'un axe vertical sur le groupeur 1. Elles peuvent être qualifiées de roues « folles » comme sur les chariots de supermarché par exemple.

Selon un exemple, lorsque le groupeur 1 avance suivant la direction principale d'avancement A en étant porté ou en étant tracté par un tracteur 3 avançant également suivant la direction principale d'avancement A, le groupeur 1 peut être positionné selon la direction principale d'avancement A au moins en partie à la fois à l'arrière et sur un côté du tracteur 3. Ainsi, l'orifice d'entrée 21 peut être positionné sensiblement parallèlement à un tracteur 3. Avantageusement, l'orifice d'entrée 21 peut être positionné selon la direction transversale z sur un même plan que le tracteur 3. Ainsi, le groupeur 1 est compact sur sa dimension longitudinale x lorsqu'il avance selon sa direction principale d'avancement A grâce à un tracteur 3.

Selon un exemple, le groupeur 1 peut avancer suivant la direction principale d'avancement A en étant motorisé. Ainsi, de préférence, le groupeur 1 comprend des roues additionnelles 70 et un moteur non représenté dans les figures. Dans le cas d'un groupeur 1 motorisé, les roues additionnelles 70 peuvent typiquement être des roues directrices.

### REFERENCES NUMERIQUES

1 : groupeur
10 : montant
11 : chambre de groupement
11a : fond de chambre
11b : entrée de chambre
111 : plancher
112 : ouverture de sortie
112a : plateforme de sortie
114 : dispositif plaquant
L_{c} : largeur de chambre de groupement
120 : dispositif de transit
120a : surface de réception
120b : rampe
120c : structure de support
120d : système en croix
P1 : axe de basculement
122 : un premier actionneur mécanique
121 : un deuxième actionneur mécanique
12 : zone de sortie
123 : mécanisme de sortie
124 : système de rétention
124a : surface de rétention
124b : un troisième actionneur mécanique
P2 : axe de pivotement de la plaque de rétention
13 : Système de cerclage
13a : cadre
130 : lien
14 : Système de poussé
141 : Plaque d'éjection
20 : Dispositif de ramassage
21 : orifice d'entrée
22 : parois latérales
23 : mécanisme de transport
30 : Système hydraulique
31 : pompe hydraulique
32 : réservoir hydraulique
33 : radiateur à huile
70 : roue additionnelle
A : direction principale d'avancement
Z : direction de groupement
E : direction d'éjection
2 : paquet de balles
2a : balle
N : nombre de balle
L_{b} : dimension transversale d'une balle
I_{b} : dimension longitudinale d'une balle
2b : pile de balles
3 : tracteur
3a : bras de relevage
4 : ensemble

## Revendications

1. Groupeur (1) de balles (2a), notamment de foin ou de paille, configuré pour avancer selon une direction principale d'avancement (A), comprenant un système de liage de paquets (2) de balles (2a), **caractérisé en ce que** le système de liage comprend un système de cerclage (13), le système de cerclage (13) comprenant un cadre (13a) configuré de sorte à entourer un paquet (2) de balles (2a) présents dans le groupeur (1), le système de cerclage (13) étant configuré de sorte à positionner un lien (130) à l'intérieur du cadre (13a) et déclencher, lorsque le paquet (2) de balles (2a) se trouve à l'intérieur du cadre (13a), l'éjection du lien (130) hors du cadre (13a) et l'enroulement puis la fermeture du lien (130) autour du paquet (2).

2. Groupeur (1) de balles (2a) selon la revendication précédente, dans lequel le cadre (13a) encadre une ouverture de sortie (112) d'une chambre de groupement (11) des balles (2a) du groupeur (1).

3. Groupeur (1) de balles (2a) selon l'une quelconque des revendications précédentes comprenant une chambre de groupement (11) des balles (2a), la chambre de groupement (11) comprenant un système de poussée (14) permettant d'éjecter le paquet (2) de la chambre de groupement (11), le groupeur (1) étant configuré de sorte que :
- le système de poussée (14) pousse le paquet (2) jusqu'à une première position d'un premier lien (130), puis le système de cerclage (13) appose un premier lien (130) sur le paquet (2),
- puis, le système de poussée (14) continue de pousser le paquet (2) jusqu'à une deuxième position d'un deuxième lien (130), puis le système de cerclage (13) appose un deuxième lien (130) sur le paquet (2).

4. Groupeur (1) de balles (2a) selon l'une quelconque des revendications précédentes, dans lequel une partie du cadre (13a) est intégrée dans un plancher (111) d'une chambre de groupement (11) des balles (2a) du groupeur (1).

5. Groupeur (1) de balles (2a) selon l'une quelconque des revendications précédentes dans lequel le cadre (13a) comprend :
- un dispositif de positionnement configuré de sorte à positionner au moins un lien (130), de préférence une pluralité de liens (130), à l'intérieur du cadre (13a),
- une tête de cerclage, la tête de cerclage étant configurée de sorte à tendre et fermer l'au moins un lien (130) autour du paquet (2).

6. Groupeur (1) de balles (2a) selon la revendication précédente dans lequel le dispositif de positionnement est configuré de sorte à pousser l'au moins un lien le long du cadre (13a), le cadre (13a) étant creux.

7. Groupeur (1) de balles (2a) selon l'une quelconque des deux revendications précédentes dans lequel lorsque le lien (130) forme un contour fermé ou sensiblement fermé à l'intérieur du cadre (13a), la tête de cerclage étant configurée des sorte à rétracter le lien (130) de sorte à provoquer une sortie du lien (130) hors du cadre (13a) pour le positionner en contact avec le paquet (2).

8. Groupeur (1) de balles (2a) selon l'une quelconque des deux revendications précédentes dans lequel le système de cerclage (13) est configuré pour appliquer une tension sensiblement supérieure ou égale à 500 N, de préférence supérieure ou égale à 1000 N, de préférence supérieure ou égale à 4000N, de préférence égale à 5000 N.

9. Groupeur (1) de balles (2a) selon l'une quelconque des revendications précédentes dans lequel l'au moins un lien (130) est fermé au niveau d'une épissure sur le paquet (2), et dans lequel l'épissure est réalisée par soudure, de préférence par friction, par application thermique ou par ultrasons ou par assemblage-emboutissage.

10. Groupeur (1) de balles (2a) selon l'une quelconque des revendications précédentes dans lequel l'au moins un lien (130) forme un contour fermé dans un plan perpendiculaire à une direction d'avancée A du groupeur (1).

11. Groupeur (1) de balles (2a) selon l'une quelconque des revendications précédentes comprenant un dispositif de ramassage (20) configuré pour :
- ramasser des balles (2a) présentant une direction longitudinale (I_{b}) et disposées sur un sol et,
- acheminer les balles (2a) selon une direction d'acheminement contenue dans un plan vertical et parallèle à la direction principale d'avancement (A) jusqu'à une zone de sortie (12) et en maintenant la direction longitudinale (I_{b}) des balles (2a) parallèle à un plan vertical (x, y) comprenant la direction principale d'avancement (A).

12. Groupeur (1) de balles (2a) selon la revendication précédente comprenant une chambre de groupement (11) des balles (2a), configurée pour recevoir les balles (2a) acheminées par le dispositif de ramassage (20) et comprenant un plancher (111), le plancher (111) étant configuré pour supporter plusieurs balles (2a) en maintenant la direction longitudinale (Ib) des balles (2a) parallèle à un plan vertical (x, y) comprenant la direction principale d'avancement (A), de préférence les balles (2a) étant disposées cote à cote selon une direction de groupement (Z) de sorte à former une partie au moins d'un paquet (2) de balles (2a), la direction de groupement (Z) étant perpendiculaire à ladite direction principale d'avancement (A), la chambre présentant une ouverture de sortie (112) conformée pour permettre l'évacuation du paquet (2) hors de la chambre de groupement (11) en vue de son évacuation par gravité sur le sol.

13. Groupeur (1) de balles (2a) selon la revendication précédente, dans lequel la chambre de groupement (11) comprend un dispositif de transit (120) conformé pour déplacer par gravité chaque balle (2a) depuis la zone de sortie (12) du dispositif de ramassage (20) jusqu'à la chambre de groupement (11).

14. Groupeur (1) de balles (2a) selon la revendication précédente, dans lequel le dispositif de transit (120) comprend une rampe (120b) et une surface de réception (120a), le dispositif de transit (120) étant monté mobile en rotation autour d'un axe horizontal, dit de basculement (P1), entre :
- une première position dans laquelle la rampe (120b) est inclinée par rapport à la verticale et la surface de réception (120a) est inclinée par rapport à l'horizontal, de sorte que chaque balle (2a) glisse sur la rampe (120b) par gravité depuis la zone de sortie (12) du dispositif de ramassage (20) jusqu'à parvenir en butée sur la surface de réception (120a),
- une deuxième position dans laquelle la rampe (120b) se redresse en direction de la verticale, de préférence en étant sensiblement à la verticale, et la surface de réception (120a) est positionnée de sorte à former une partie du plancher (111),
le groupeur (1) comprenant un premier actionneur (122) configuré pour faire translater la rampe (120b) selon la direction de groupement (Z), depuis la deuxième position, de sorte à exercer sur les balles (2a) un effort tendant à déplacer les balles (2a) à l'intérieur de la chambre de groupement (11) depuis la surface de réception (120a) en direction d'un fond (11a) de la chambre de groupement (11).

15. Groupeur (1) de balles (2a) selon l'une quelconque des revendications précédentes comprenant une chambre de groupement (11) des balles (2a), la chambre de groupement (11) comprenant un plancher (111) et une ouverture de sortie (112) comprenant une plateforme de sortie (112a), la plateforme de sortie (112a) agissant comme extension du plancher (111) en dehors de la chambre de groupement (11), la plateforme de sortie (112a) étant configurée pour permettre de maintenir le paquet (2) parallèlement au plancher (111) lors de l'éjection du paquet (2) et de son empaquetage par le système de cerclage (13), le paquet (2) pouvant ensuite être évacué de la plateforme de sortie (112a) par gravité pour atterrir sur le sol.
